# EUROPEAN PATENT SPECIFICATION

(11) **EP 4 193 827 B1**
(45) Date of publication and mention of the grant of the patent: **21.01.2026**
(21) Application number: 22202415.0
(22) Date of filing: 19.10.2022
(51) Int. Cl.: A01F 15/08, A01F 15/07

(54) **BALE WRAPPING SYSTEM**
BALLENWICKELSYSTEM
SYSTÈME D'EMBALLAGE DE BALLES

(30) Priority: 13.12.2021 GB 202117952
(43) Date of publication of application: 14.06.2023
(73) Proprietor: AGCO International GmbH, 8212 Neuhausen am Rheinfall (CH)
(72) Inventor: SCHLICHTING, Malte Cornelius, 38304 Wolfenbüttel (DE)
(74) Representative: AGCO Intellectual Property Department

(56) References cited:
- EP-A1- 3 666 670
- US-A1- 2009 217 827
- US-A1- 2018 260 675

## Description

### CROSS-REFERENCE TO RELATED APPLICATIONS

Not applicable.

### FIELD

Embodiments of the present disclosure relate generally to agricultural balers, and in particular to a bale wrapping system forming part of or for use with agricultural balers and the like.

### BACKGROUND

It is known to provide baling systems which allow an operator to choose between twine wrapping or net wrapping or other binding materials. Twine wrapping is advantageously cheaper when compared with net wrap, however the process is slower as it needs to be wrapped around the formed bales more times, (ca. 20 revolutions compared with 2-4 revolutions for net wrapping). Some systems additionally allow for an operator to set a desired number of revolutions of the selected wrapping material.

For high moisture bales, e.g. cut grass, it is known to wrap in net wrap and then overwrap with plastics film (either in the baler or on a separate wrapping apparatus). The over wrapping creates an anaerobic environment allowing controlled fermentation of the cut grass as it becomes animal feed. Other systems / methods involve wrapping the formed bale directly with film, but there can be issues with stalks poking through and thereby ruining an entire bale of feed (e.g. where the grass rots rather than ferments if not completely sealed). Though if this does not happen such film wrapped bales are low maintenance for the farmer (and use of the more expensive net wrap is avoided).

As multiple different baling strategies may be employed by an operator using a single baler, e.g. depending on time of year, crop type etc. it is advantageous to provide a system which allows for the wrapping materials to be interchanged. A known solution includes use of a carousel which holds multiple different kinds of wrapping material (i.e. a selection of net wrap and film wrap). This allows different kinds of wrapping material to be carried by a single baler. At present the operator selects the kind of wrap desired and manually feeds this from the relevant carousel station to a wrapping apparatus within the baling chamber of the baler. However, switching between different material types for the wrapping material can be time consuming and labour intensive. It can also be difficult for an operator to assess and determine an appropriate wrapping material for the material being collected by the baler. EP 3 666 670 A1 describes a baling apparatus which utilises a sensing arrangement for monitoring surface properties of a bale.

### BRIEF SUMMARY

In an aspect of the invention there is provided a control system for controlling operation of one or more controllable components of an agricultural baler, the control system comprising one or more controllers, and being configured to: receive data indicative of a moisture level of material collected by the agricultural baler; determine, in dependence on the moisture level, a baling strategy for forming the collected material into a bale, the baling strategy including an indication of wrapping material for the formed bale; and generate and output one or more control signals for controlling one or more operational components associated with the baler in dependence on the determined baling strategy.

Advantageously, the control system of the present invention is operable to determine a baling strategy based on moisture content of the collected material. This ensures an appropriate binding and/or wrapping of the collected material or the formed bale to mitigate problems discussed herein.

The baling strategy may comprise one or more of: a wrapping material type; a combination of wrapping materials; a number of wraps of a wrapping material; and a thickness for a wrapping material. The wrapping material type may include net wrap, or twine wrap, for example. The wrapping material type may include a plastics film, for example.

The one or more operational components may comprise a user interface, such as a display screen. The user interface may be operable to provide information indicative of the determined baling strategy to an operator of the baler. The control system may be configured to generate and output the one or more control signals for controlling operation of the user interface to display the determined baling strategy to an operator of the agricultural baler.

The operational component may comprise a carousel for automating loading of one or more wrapping materials into a wrapping apparatus associated with the agricultural baler for wrapping of the collected material in accordance with the determined baling strategy. The control system may be configured to generate and output the one or more control signals for automatically controlling the carousel to load the one or more wrapping materials.

The baling strategy may comprise firstly wrapping the collected material with a first wrapping material and subsequently over wrapping the bound material with a second wrapping material.

The control system may be configured to: receive sensor data from a moisture sensor associated with the agricultural baler; and determine a moisture level of the collected material in dependence thereon. The moisture sensor may comprise one or more of: an infrared sensor, a resistive sensor, an optical sensor; and a capacitive sensor. The moisture sensor may be mounted or otherwise coupled to the agricultural baler and configured to monitor material collected into the baler. The moisture sensor may be mounted or otherwise coupled to the agricultural baler and configured to monitor material being collected by a crop pick-up of the baler. The moisture sensor may be configured to monitor material within a baling chamber of the baler.

The control system may be configured to determine an expected moisture level in dependence on data indicative of the operating environment of the baler. The operating environment data may comprise a mapped environment comprising information indicative of a measured or expected moisture level for material at one or more locations within the mapped environment. The operating environment data may comprise an indication of one or more environmental conditions, including one or more of: a temperature, a time of year; a time of day; a rainfall measurement; and a humidity.

The control system may be configured to receive a user input indicative of a moisture level provided by an operator of the baler and determine the baling strategy in dependence thereon. The user input may be provided via a user interface of the baler, for example.

According to a further aspect of the invention there is provided a system, comprising: a carousel for loading a plurality of different wrapping materials onto a wrapping apparatus; and a control system of any preceding aspect of the invention configured to control operation of the carousel and/or wrapping apparatus in accordance with a determined baling strategy.

According to a further aspect of the invention there is provided an agricultural baler comprising and/or being controllable by a control system, or comprising a system as described herein with reference to any preceding aspect of the invention.

A yet further aspect of the invention provides a method of controlling operation of one or more controllable components of an agricultural baler, comprising: receiving data indicative of a moisture level of material collected by the agricultural baler; determining, in dependence on the moisture level, a baling strategy for forming the collected material into a bale, the baling strategy including an indication of a wrapping material for the formed bale; and controlling one or more operational components associated with the baler in dependence on the determined baling strategy.

The baling strategy may comprise one or more of: a wrapping material type; a combination of wrapping materials; a number of wraps of a wrapping material; and a thickness for a wrapping material. The wrapping material type may include net wrap, or twine wrap, for example. The wrapping material type may include a plastics film, for example.

The one or more operational components may comprise a user interface, such as a display screen. The user interface may be operable to provide information indicative of the determined baling strategy to an operator of the baler. The method may include controlling operation of the user interface to display the determined baling strategy to an operator of the agricultural baler.

The operational component may comprise a carousel for automating loading of one or more wrapping materials into a wrapping apparatus associated with the agricultural baler for wrapping of the collected material in accordance with the determined baling strategy. The method may comprise controlling the carousel to load the one or more wrapping materials.

The baling strategy may comprise firstly wrapping the collected material with a first wrapping material and subsequently over wrapping the bound material with a second wrapping material.

The method may include: receiving sensor data from a moisture sensor associated with the agricultural baler; and determining a moisture level of the collected material in dependence thereon. The moisture sensor may comprise one or more of: an infrared sensor, a resistive sensor, an optical sensor; and a capacitive sensor. The moisture sensor may be mounted or otherwise coupled to the agricultural baler and configured to monitor material collected into the baler. The moisture sensor may be mounted or otherwise coupled to the agricultural baler and configured to monitor material being collected by a crop pick-up of the baler. The moisture sensor may be configured to monitor material within a baling chamber of the baler.

The method ay include determining an expected moisture level in dependence on data indicative of the operating environment of the baler. The operating environment data may comprise a mapped environment comprising information indicative of a measured or expected moisture level for material at one or more locations within the mapped environment. The operating environment data may comprise an indication of one or more environmental conditions, including one or more of: a temperature, a time of year; a time of day; a rainfall measurement; and a humidity.

The method may include receiving a user input indicative of a moisture level provided by an operator of the baler and determine the baling strategy in dependence thereon. The user input may be provided via a user interface of the baler, for example.

A further aspect of the invention provides computer software comprising computer-readable instructions which, when executed by a processor, cause performance of a method in accordance with the preceding aspect of the invention.

A further aspect of the invention provides a non-transitory computer readable storage medium comprising the computer software of the preceding aspect of the invention.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention will now be described, by way of example only, with reference to the accompanying drawings, in which:
FIG. 1 is a side view illustrating an agricultural baler embodying aspects of the present invention;
FIG. 2 is a perspective view of the baler shown in FIG. 1;
FIG. 3 is a further perspective view of the baler shown in FIG. 1 and FIG. 2;
FIG. 4 is a side cross-sectional view of the baler shown in the preceding Figures;
FIG. 5 shows a schematic perspective view of elements of a wrapping apparatus forming part of aspects of the invention;
FIG. 6 is a further schematic diagram illustrating the wrapping apparatus of FIG. 5;
FIG. 7 is a schematic diagram illustrating an embodiment of a control system in accordance with the invention; and
FIG. 8 is a schematic diagram of a tractor-baler combination embodying aspects of the present invention.

### DETAILED DESCRIPTION

In general, the Figures illustrate an agricultural baler 10 embodying aspects of the invention, including the use of moisture sensors (e.g. sensor 50) for determining a moisture level of crop material collected by the baler 10 and subsequent control thereof of a carousel 52 for selecting and feeding a determined wrapping material to a wrapping mechanism of the baler 10, that selection made in dependence on a determined baling strategy.

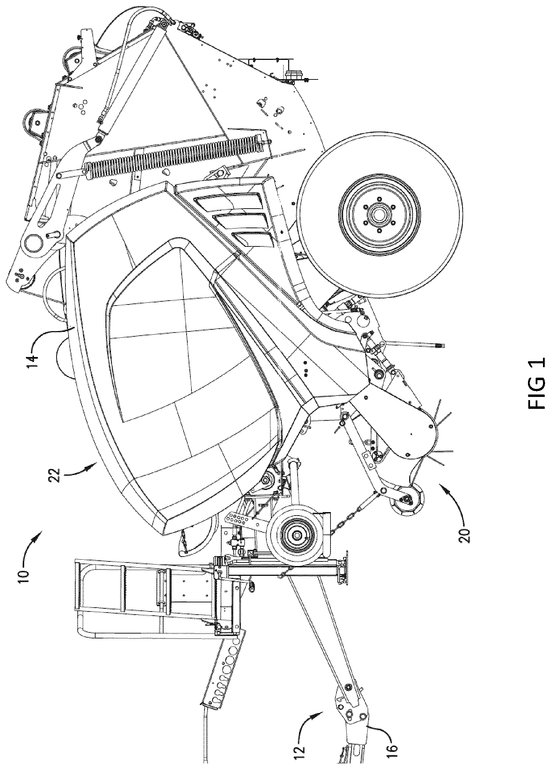

FIG. 1 shows an agricultural baler 10 that may employ various aspects of the invention. Although for simplicity aspects of the invention will be described in detail with respect to the agricultural baler 10, the invention is not limited to the agricultural baler 10 and may be employed on various types of agricultural equipment without departing from the scope of the invention. For example, although the agricultural baler 10 is a round baler, in other embodiments aspects of the invention may be included on a square baler or other type of baler.

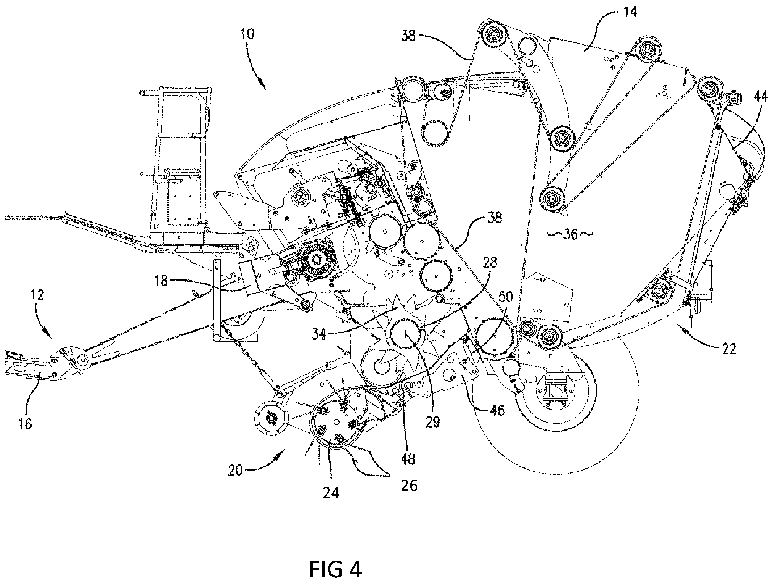

The agricultural baler 10 generally includes a towing and driveline portion 12 extending from a main body 14. The towing and driveline portion 12 includes a tow hitch 16 configured to be connected to a towing vehicle such as a tractor (e.g. tractor 1) or the like during operation, such that the baler 10 is pulled in a forward direction along a windrow of dried hay or similar crop lying in a field. The towing and driveline portion 12 may also include driveline connections 18 (FIG. 4) for operably connecting the drivable features of the agricultural baler 10 (i.e., the pickups, rotor, baling mechanism, etc., which will be discussed in more detail below) to a power take-off (PTO) portion of the towing vehicle.

The main body 14 generally includes a crop pickup portion 20 and a baling portion 22. During operation, the crop pickup portion 20 engages the cut hay or other crop lying in a field and conveys it upward and rearward towards the baling portion 22. The baling portion 22 in turn compresses the hay into a desired shape (in the case of a round baler, into a cylindrical bale), wraps the bale, and ejects the bale into the field for later retrieval.

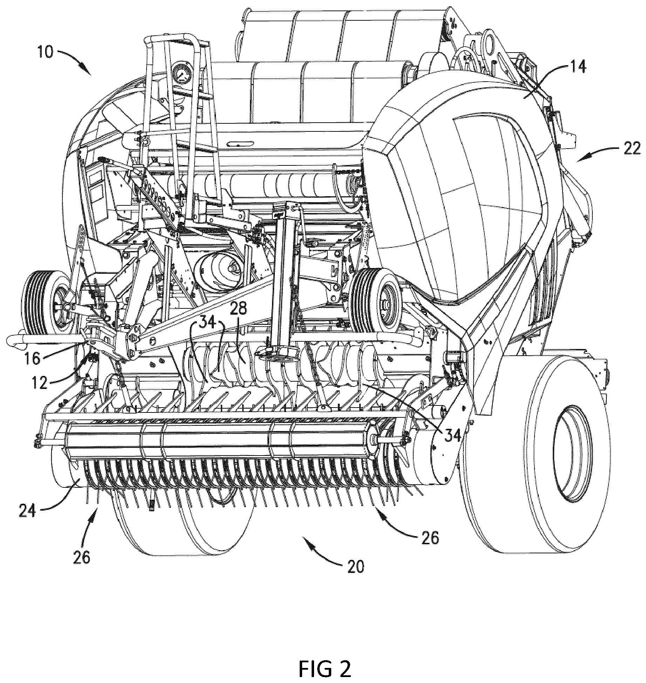

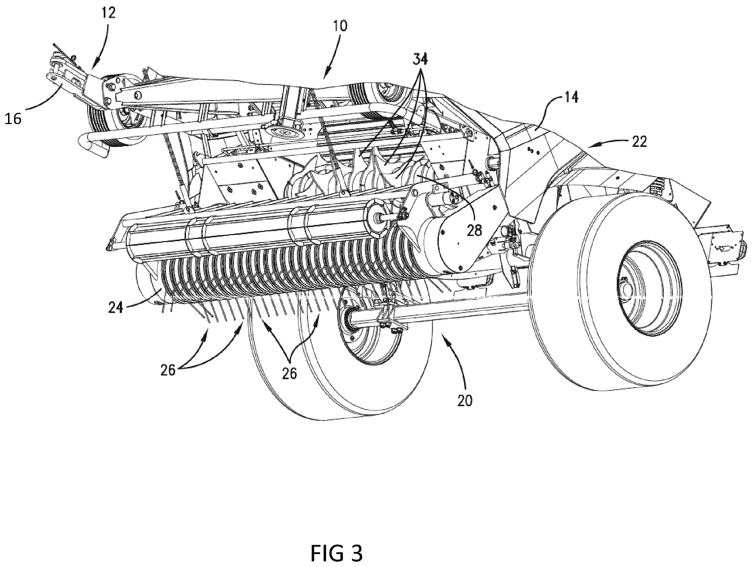

FIGS. 2 and 3 show the crop pickup portion 20 in more detail. The crop pickup portion 20 includes a rotary rake 24 that engages the hay or other crop in a windrow. The rotary rake 24 includes a plurality of spinning tines 26 that contact the hay or other crop as the agricultural baler 10 is towed forward and flings the hay or other crop upwards and rearwards toward the baling portion 22. The crop pickup portion 20 may further include a rotor 28 that is configured to stuff the hay or other crop into the baling portion 22. In some embodiments, the crop pickup portion 20 may include one or more augers operably coupled to the rotor 28 and sandwiching a plurality of stuffers 34 or else provided upstream of the rotor 28. When the hay or other crop leaves the rotary rake 24, the augers center the hay and the spinning stuffers 34 of the rotor 28 pack the hay into the baling portion 22.

FIG. 4 shows the baling portion 22 in more detail. The baling portion 22 generally includes a baling chamber 36, a plurality of compression belts 38, and a wrapping mechanism 60. The rotor 28 stuffs the hay or other crop into the baling chamber 36, and more particularly into the compression belts 38 provided in the baling chamber 36. The rotating compression belts 38 continuously roll the hay or other crop and apply pressure thereto, therefore compacting the hay or other into a densely packed bale. The compression belts 38 are expandable such that as more and more hay or other crop enters the baling chamber 36, the circumference of the portion of the belts 38 pressing on the bale 42 expands as the outer circumference of the bale 42 expands with the addition of more hay or other crop 55 being added to the bale 42. Once the desired size of the bale 42 is achieved, the wrapping mechanism 60 wraps the outer circumference of the bale 42 in plastic, netting, or another desired wrapping material. As discussed herein, the present invention relates to the selection of the desired wrapping material primarily in dependence on a moisture level associated with the collected crop material. Finally, a movable tailgate 44 of the agricultural baler 10 swings open and the wrapped bale 42 is ejected into the field for later collection.

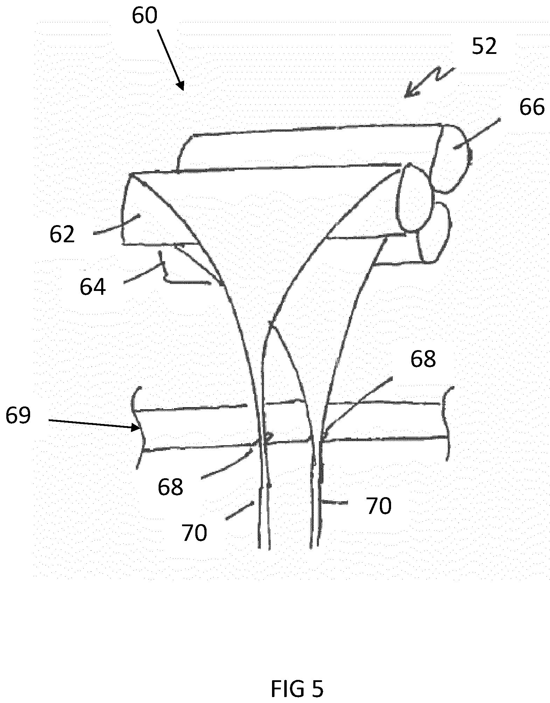

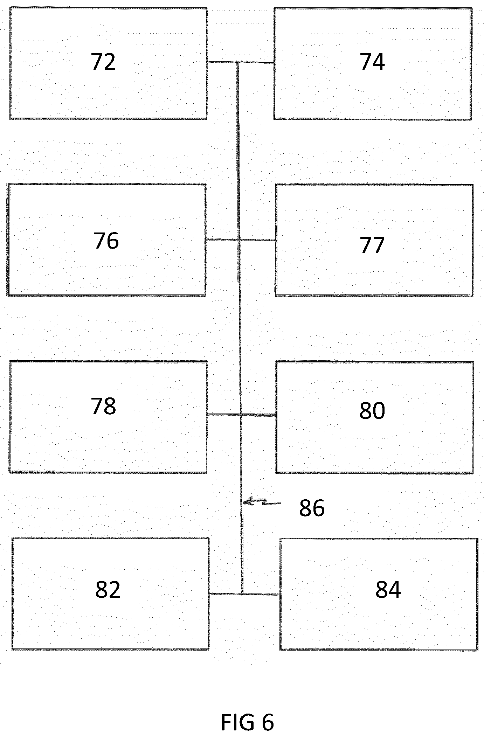

Elements of an automated wrapping mechanism 60 operable under the control system according to aspects of the invention are shown in Figures 5 and 6.

The wrapping mechanism 60 includes carousel 52, housing first, second and third rolls of wrapping material 62, 64, 66 as shown in FIG. 5. At least two of the rolls are of differing kinds of wrapping material, for example a first may be netwrap and a second may be plastics film. In the illustrated embodiment the first and second rolls 62, 64 are of differing kinds of wrapping material.

The carousel 52 may conveniently comprise a wrapping material storage system in which a number of wrapping material supports are provided adapted to be indexed about a central support axis. Each roll of wrapping material 62, 64, 66 is located on an associated support. A drive mechanism 82 is provided for indexing the wrapping material supports. Each roll of wrapping material has a leading edge.

When initially loading each roll of wrapping material an operator pays out the leading edge of the wrapping material and gathers the leading edge of the wrapping material to form a rope or gathered string 70 of wrapping material. The operator then inserts the gathered string of wrapping material into a suitable slot or retention notch 68, formed in a suitable support 69.

In FIG 5, the support 69 is shown as a frame element of the baler 1 located beneath the carousel 52 with two retention notches 68. However, the support 69 may be located in any suitable location and, for example, may be formed in the side frame of the wrapping material storage system. In such an arrangement, each retention notch 68 may be formed adjacent the respective roll of wrapping material.

A pair of feed rollers are provided adjacent a wrapping material inlet of a baling chamber (not shown). The feed rollers are operated by a drive mechanism 74 actuated by a local control unit 72 normally to rotate the feed rollers in a feed direction so as, when the leading edge of the wrapping material is caught by the pair of rotating feed rollers, draws the wrapping material from the carousel 52 and into the baling chamber 36.

The feed apparatus further comprises a displacement apparatus configured to move the gathered string between a first position in which the gathered string is located at least in part within its retention notch 68 and a second position in which the gathered string is located at least in part in contact with the pair of feed rollers.

In a preferred arrangement the displacement apparatus comprises a moveable arm with a grabbing device. Drive mechanisms 76, 77 are provided to control movement of the movable arm and operation of the grabbing device. These drive mechanisms 76, 77 are actuated by the control unit 72.

A severing apparatus is provided at a severing location downstream of the feed rollers. A drive mechanism 78 for the severing apparatus is actuated by the control unit 72 to cause severing of the wrapping material once the formed bale has been sufficiently wrapped.

A gathering apparatus is provided between the reservoir and the pair of feed rollers 74. On actuation of a drive mechanism 80 for the gathering apparatus by the control unit 72, the side edges of the wrapping material are gathered together to form a string of the wrapping material. It will be understood that where the wrapping material is a film wrapping material the gathering apparatus 80 will be actuated toward the end of each wrapping operation as is usual in wrapping of bales with a film wrapping material. In this way, when wrapping with a film wrapping material a string of wrapping material is reformed at the end of each baling operation.

The control unit 72 is in electronic communication with the various drive mechanisms 74, 76, 77, 78, 80, 82 by way of a suitable network 86 in order to control operation of the loading of the wrapping material, e.g. under instruction of control system 100 - see below, and in accordance with a determined baling strategy as is described herein.

Prior to commencement of a wrapping operation all of the strings 70 of wrapping material are located in their respective notches. In order for wrapping to commence, the drive mechanisms 76, 77 of the displacement apparatus are actuated to grab an appropriate string of wrapping material and remove it from its retention notch 12. The string of wrapping material is then moved such that a leading edge of the string of wrapping material contacts the pair of feed rollers. Actuation of the feed roller drive mechanism 74 then causes the wrapping material to be drawn from the carousel 52 and into the baling chamber 36.

As the wrapping material is drawn into the baling chamber 36 the edges of the wrapping material move apart such that wrapping material will flow evenly from the carousel 52 through the pair of feed rollers to the baling chamber 36.

Once the bale has been sufficiently wrapped the drive mechanism 78 of the severing mechanism is actuated to sever the wrapping material.

Where the baling strategy for a subsequent bale indicates to continue wrapping with the current wrapping material, no further changes are required.

If a wrapping material roll is exhausted (this may be detected by a suitable sensor in communication with the control unit 72, for example), the control unit 72 may be actuated to cause the wrapping material support system to be indexed such that a fresh roll of wrapping material is in a suitable location to allow for the string of wrapping material to be removed from its retention notch 68 and guided towards the pair of feed rollers.

If an operator desires to wrap a bale in a different wrapping material, e.g. because of the suggested baling strategy as determined by control system 100, this may be communicated to the control unit 72, for example by way of a user input device, e.g. in the form of a display screen 54 in communication with the control unit 72. In alternative embodiments, the control system 100 of the invention may automatically control swapping of wrapping materials through automatic communication with the control unit 72 in accordance with the determined baling strategy.

If the current wrapping material is a film wrapping material, the drive mechanism 74 of the pair of feed rollers is reversed, freeing the string of wrapping material so that it may be grabbed by the displacement apparatus and returned to a suitable retention notch 68.

If the current wrapping material is a netwrap wrapping material, the control unit 72 actuates the drive mechanism 80 of the gathering apparatus in order to draw the sides of the wrapping material together to form a string. The drive mechanisms 76, 77 of the displacement apparatus are actuated to grab the string of wrapping material and direct the string of wrapping material to a suitable retention notch 68.

If the operator knows which is to be the final bale using netwrap, e.g. in dependence on the determined baling strategy, the gathering device may be actuated during the final baling. Alternatively, the gathering apparatus can be actuated to draw the netwrap wrapping material into a string while the baler is inactive. Once the netwrap has been drawn into a string the control unit 72 actuates the drive mechanism 74 of the pair of feed rollers to reverse and so free the string of netwrap wrapping material from the pair of feed rollers before the displacement apparatus is actuated to move the string of gathered netwrap wrapping material to the relevant retention notch 68.

The control unit 72 then causes the wrapping material support system to be indexed such that a string of the desired wrapping material is in a position to be grabbed and guided towards the pair of feed rollers.

The drive mechanisms 76, 77 of the displacement apparatus are then once again actuated to grab the string of wrapping material and deliver the string of desired wrapping material to the pair of feed rollers.

As will be discussed in detail herein, the baler 10 additionally includes one or more moisture sensors for monitoring a moisture level associated with the crop material collected at the crop pick up portion 20. In the illustrated embodiment the moisture sensor comprises a capacitive moisture sensor 50 mounted on an interior wall of the baling chamber 36. The capacitive sensor 50 has a sensing element which contacts the crop material within the baling chamber 36 in use to obtain the measurement of the moisture level associated with the crop material, as is known in the art. The moisture sensor 50 is used by a control system 100 of the baler 10, to determine a moisture level associated with the collected crop material and determine therefrom an appropriate baling strategy for the material, including an identification of an appropriate wrapping material or wrapping material combination for the bale.

As discussed herein, the baling strategy may be used by the control system 100 for controlling operational components of the baler 10, including a carousel 52 for automating loading of different wrapping materials into the baling chamber 36 for wrapping the collected material in accordance with the determined baling strategy, e.g. in the manner discussed hereinabove, and/or control over a user interface 54 associated with the baler 10, e.g. provided as a display terminal of a coupled tractor 1 or indeed a handheld terminal, to provide an indication of the determined baling strategy to an operator of the baler 10.

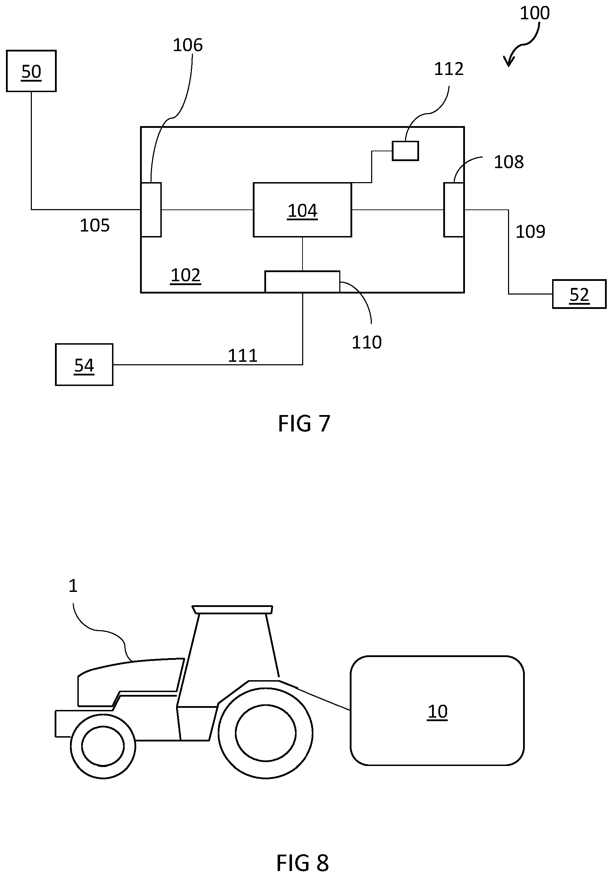

FIG 7 illustrates the control system 100 further. As shown, control system 100 comprises a controller 102 having an electronic processor 104, an electronic inputs 106 and electronic outputs 108, 110. The processor 104 is operable to access a memory 112 of the controller 102 and execute instructions stored therein to perform the steps and functionality of the present invention discussed herein, e.g. by controlling the user interface 54, to indicate, e.g. to an operator of the baler 10, information indicative of the determined baling strategy, and/or controlling operation of the carousel 52 through generation and output of one or more control signals thereto, or to a local control unit of the carousel 52, e.g. control unit 72.

The processor 104 is operable to receive sensor data via input 106 which, in the illustrated embodiment, takes the form of input signals 105 received from the moisture sensor 50. Utilising this data, the processor 104 is configured to analyse the data and determine therefrom a measure of a moisture level associated with the material collected by the baler 10. As discussed herein, the determined moisture level is used to determine a baling strategy for the baler 10, and in particular an indication of a wrapping material for the formed bale. A notification indicative thereof can be presented to an operator of the baler 10 via the user interface 54 - see below.

As described above, the controller 102 includes an electronic output 108 configured output control signals 109 generated by the processor 104 for controlling operation of the carousel 52. Specifically, processor 104 is operable to generate, and the controller 102 operable to then output via output 108, control signals 109 for controlling operation of the carousel 52 in the manner described herein, e.g. through selection of the appropriate wrapping material (as determined by the baling strategy), rotating the carousel 52 into position and subsequently loading the selected wrapping material into the baling chamber 36 of the baler 10 for wrapping the collected material. As will be appreciated, the controller 102 may output the control signals 109 to a local processing unit, e.g. control unit 72, of the carousel 52 for controlling operation thereof.

Output 110 is operably coupled to the user interface 54 of the baler 10. Here, the control system 100 is operable to control operation of the user interface 54, e.g. through output of control signals 111 in order to display data to an operator of the baler 10 relating to the operation of the control system 100. Specifically, the control system 100 is operable to control the user interface 54 to display to the operator an indicator of the baling strategy.

FIG 8 illustrates an agricultural vehicle in the form of a tractor 1 operably coupled to baler 10. It will be appreciated that, in use, the tractor 1 and baler 10 may be operably coupled at tow hitch 16 of the baler 10, although other couplings are envisaged and will be appreciated by the skilled reader.

## Claims

1. A control system (100) for controlling operation of one or more controllable components of an agricultural baler, the control system comprising one or more controllers, and being configured to:
receive, via an electronic input (106), data indicative of a moisture level of material collected by the agricultural baler;
determine, in dependence on the moisture level, a baling strategy for forming the collected material into a bale, the baling strategy including an indication of a wrapping material for the formed bale; and
generate and output, via an electronic output (108) one or more control signals for controlling one or more operational components associated with the baler in dependence on the determined baling strategy.

2. A control system as claimed in claim 1, wherein the baling strategy comprises one or more of:
a wrapping material type;
a combination of wrapping materials;
a number of wraps of a wrapping material; and
a thickness for a wrapping material.

3. A control system as claimed in any preceding claim, wherein the one or more operational components comprises a user interface operable to provide information indicative of the determined baling strategy to an operator of the baler.

4. A control system as claimed in claim 3, configured to generate and output the one or more control signals for controlling operation of the user interface to display the determined baling strategy to an operator of the agricultural baler.

5. A control system of any preceding claim, wherein the operational component comprises a carousel for automating loading of one or more wrapping materials into a wrapping apparatus associated with the agricultural baler wrapping of the collected material in accordance with the determined baling strategy; and wherein the control system is configured to generate and output the one or more control signals for automatically controlling the carousel to load the one or more wrapping materials into a wrapping apparatus of the baler.

6. A control system as claimed in any preceding claim, wherein the baling strategy comprises firstly wrapping the collected material with a first wrapping material and subsequently over wrapping the bound material with a second wrapping material.

7. A control system as claimed in any preceding claim, configured to:
receive, via the electronic input, sensor data from a moisture sensor associated with the agricultural baler; and
determine a moisture level of the collected material in dependence thereon.

8. A control system as claimed in claim 7, wherein the moisture sensor is mounted or otherwise coupled to the agricultural baler and configured to monitor material collected into the baler.

9. A control system as claimed in claim 8, wherein the moisture sensor is mounted or otherwise coupled to the agricultural baler and configured to monitor material being collected by a crop pick-up of the baler, and/or material within a baling chamber of the baler.

10. A control system as claimed in any of claims 1 to 6, configured to determine an expected moisture level in dependence on data indicative of the operating environment of the baler; wherein the operating environment data comprises a mapped environment comprising information indicative of a measured or expected moisture level for material at one or more locations within the mapped environment.

11. A control system as claimed in claim 10, wherein the operating environment data comprises an indication of one or more environmental conditions, including one or more of: a temperature, a time of year; a time of day; a rainfall measurement; and a humidity.

12. A control system as claimed in any preceding claim, configured to receive a user input indicative of a moisture level provided by an operator of the baler and determine the baling strategy in dependence thereon.

13. A system, comprising:
a carousel for loading a plurality of different wrapping materials onto a wrapping apparatus; and
a control system as claimed in any preceding claim configured to control operation of the carousel and/or wrapping apparatus in accordance with a determined baling strategy.

14. An agricultural baler comprising and/or being controllable by the control system of any of claims 1 to 12, or comprising the system of claim 13.

15. A method of controlling operation of one or more controllable components of an agricultural baler, comprising:
receiving data indicative of a moisture level of material collected by the agricultural baler;
determining, in dependence on the moisture level, a baling strategy for forming the collected material into a bale, the baling strategy including an indication of a wrapping material for the formed bale; and
controlling one or more operational components associated with the baler in dependence on the determined baling strategy.

## Patentansprüche

1. Steuersystem (100) zum Steuern des Betriebs mindestens einer steuerbaren Komponente einer landwirtschaftlichen Ballenpresse, wobei das Steuersystem mindestens einen Controller aufweist und konfiguriert ist für:
ein Empfangen von Daten, die ein Feuchtigkeitsniveau des Materials, welches von der landwirtschaftlichen Ballenpresse gesammelt wird, indizieren, über einen elektronischen Eingang (106);
ein Ermitteln einer Ballenbildungsstrategie zur Bildung des gesammelten Materials zu einem Ballen in Abhängigkeit von dem Feuchtigkeitsniveau, wobei die Ballenbildungsstrategie eine Indizierung eines Wickelmaterials für den gebildeten Ballen beinhaltet; und
ein Erzeugen mindestens eines Steuersignals für das Steuern mindestens einer Betriebskomponente, die der Ballenpresse zugeordnet ist, in Abhängigkeit von der ermittelten Ballenbildungsstrategie und Ausgeben des Steuersignals mittels eines elektronischen Ausgangs (108).

2. Steuersystem nach Anspruch 1, wobei die Ballenbildungsstrategie aufweist:
einen Umwicklungs-Materialtyp und/oder
eine Kombination von Umwicklungsmaterialien und/oder
eine Zahl von Umwicklungen eines Umwicklungsmaterials und/oder
eine Dicke eines Umwicklungsmaterials.

3. Steuersystem nach einem der vorhergehenden Ansprüche, wobei die mindestens eine Betriebskomponente eine Nutzeroberfläche aufweist, die betreibbar ist zur Bereitstellung von Informationen, die einem Betreiber der Ballenpresse die ermittelte Ballenbildungsstrategie indizieren.

4. Steuersystem nach Anspruch 3, welches konfiguriert ist für eine Erzeugung und Ausgabe des mindestens einen Steuersignals zur Steuerung des Betriebs des Nutzerinterfaces zur Anzeige der ermittelten Ballenbildungsstrategie für einen Betreiber der landwirtschaftlichen Ballenpresse.

5. Steuersystem nach einem der vorhergehenden Ansprüche, wobei die Betriebskomponente ein Karussell aufweist zum automatischen Laden mindestens eines Umwicklungsmaterials in eine Umwicklungseinrichtung, die der landwirtschaftlichen Ballenpresse zugeordnet ist zum Umwickeln des gesammelten Materials entsprechend der ermittelten Ballenbildungsstrategie; und wobei das Steuersystem konfiguriert ist zur Erzeugung und Ausgabe des mindestens einen Steuersignals zur automatischen Steuerung des Karussells zum Laden des mindestens einen Umwicklungsmaterials in eine Umwicklungseinrichtung der Ballenpresse.

6. Steuersystem nach einem der vorhergehenden Ansprüche, wobei die Ballenbildungsstrategie zunächst das Umwickeln des gesammelten Materials mit einem Umwicklungsmaterial und ein anschließendes Überwickeln des gebundenen Materials mit einem zweiten Umwicklungsmaterial aufweist.

7. Steuersystem nach einem der vorhergehenden Ansprüche, welches konfiguriert ist für
ein Empfangen von Sensordaten von einem Feuchtigkeitssensor, der der landwirtschaftlichen Ballenpresse zugeordnet ist, über den elektronischen Eingang; und
ein Ermitteln eines Feuchtigkeitsniveaus des gesammelten Materials in Abhängigkeit hiervon.

8. Steuersystem nach Anspruch 7, wobei der Feuchtigkeitssensor an der landwirtschaftlichen Ballenpresse montiert ist oder anderweitig mit dieser gekoppelt ist und konfiguriert ist zur Überwachung des Materials, welches in die Ballenpresse gesammelt wird.

9. Steuersystem nach Anspruch 8, wobei der Feuchtigkeitssensor an der landwirtschaftlichen Ballenpresse montiert oder anderweitig mit dieser gekoppelt ist und konfiguriert ist zur Überwachung des Materials, welches mittels einer Erntegut-Aufnahme der Ballenpresse gesammelt wird, und/oder des Materials in einer ballenbildenden Kammer der Ballenpresse.

10. Steuersystem nach einem der Ansprüche 1 bis 6, welches konfiguriert ist zur Ermittlung eines erwarteten Feuchtigkeitsniveaus in Abhängigkeit von Daten, die die Betriebsumgebung der Ballenpresse indizieren, wobei die Daten hinsichtlich der Betriebsumgebung eine kartierte Umgebung aufweisen mit Informationen, die ein gemessenes oder erwartetes Feuchtigkeitsniveau des Materials an mindestens einem Ort innerhalb der kartierten Umgebung indizieren.

11. Steuersystem nach Anspruch 10, wobei die Betriebsumgebungsdaten eine Indizierung mindestens eines Umgebungszustands aufweisen, bei dem es sich um eine Temperatur und/oder eine Jahreszeit und/oder eine Tageszeit und/oder eine Regenfallmessung und/oder eine Feuchtigkeit handelt.

12. Steuersystem nach einem der vorhergehenden Ansprüche, welches konfiguriert ist zum Empfangen einer Nutzereingabe, die ein Feuchtigkeitsniveau indiziert und welche von einem Betreiber der Ballenpresse bereitgestellt wird, und zur Ermittlung der Ballenbildungsstrategie in Abhängigkeit hiervon.

13. System mit:
einem Karussell zum Laden mehrerer unterschiedlicher Umwicklungsmaterialien auf oder in eine Umwicklungseinrichtung; und
einem Steuersystem nach einem der vorhergehenden Ansprüche, welches konfiguriert ist zur Steuerung des Betriebs des Karussells und/oder der Umwicklungseinrichtung entsprechend einer ermittelten Ballenbildungsstrategie.

14. Landwirtschaftliche Ballenpresse mit und/oder steuerbar durch einem/ein Steuersystem nach einem der Ansprüche 1 bis 12 oder mit dem System nach Anspruch 13.

15. Verfahren zur Steuerung des Betriebs mindestens einer steuerbaren Komponente einer landwirtschaftlichen Ballenpresse mit:
einem Empfangen von Daten, die ein Feuchtigkeitsniveau von Material, welches von der landwirtschaftlichen Ballenpresse gesammelt wird, indizieren,
einem Ermitteln einer Ballenbildungsstrategie zur Formung des gesammelten Materials zu einem Ballen in Abhängigkeit von dem Feuchtigkeitsniveau, wobei die Ballenbildungsstrategie ein Indizieren eines Umwicklungsmaterials für den geformten Ballen beinhaltet; und
einem Steuern mindestens einer Betriebskomponente, die der Ballenpresse zugeordnet ist, in Abhängigkeit von der ermittelten Ballenbildungsstrategie.

## Revendications

1. Dispositif de commande (100) destiné à commander le fonctionnement d'un ou plusieurs composants pouvant être commandés d'une presse à balle agricole, le dispositif de commande comprenant une ou plusieurs unités de commande et étant configuré de manière à :
recevoir, par l'intermédiaire d'un dispositif d'entrée électronique (106), des données représentatives d'un niveau d'humidité de matériau collecté par la presse à balle agricole ;
déterminer, en fonction du niveau d'humidité, une stratégie de mise en forme de balle du matériau collecté, la stratégie de formation de balle comportant une indication d'un matériau d'emballage pour la balle formée ; et
produire et délivrer, par l'intermédiaire d'un dispositif de sortie électronique (108), un ou plusieurs signaux de commande afin de commander un ou plusieurs composants opérationnels associés à la presse à balle en fonction de la stratégie de formation de balle déterminée.

2. Dispositif de commande selon la revendication 1, dans lequel la stratégie de formation de balle comprend un ou plusieurs paramètres parmi :
un type de matériau d'emballage ;
une combinaison de matériaux d'emballage ;
un nombre de plis d'un matériau d'emballage ; et
une épaisseur d'un matériau d'emballage.

3. Dispositif de commande selon l'une quelconque des revendications précédentes, dans lequel le ou les composants opérationnels comprennent une interface d'utilisateur pouvant être utilisée afin de fournir des informations représentatives d'une stratégie de formation de balle déterminée à un opérateur de la presse à balle.

4. Dispositif de commande selon la revendication 3, configuré de manière à produire et à délivrer le ou les signaux de commande destinés à commander le fonctionnement de l'interface d'utilisateur afin d'afficher la stratégie de formation de balle déterminée à un opérateur de la presse à balle agricole.

5. Dispositif de commande selon l'une quelconque des revendications précédentes, dans lequel le composant opérationnel comprend un carrousel destiné à charger automatiquement un ou plusieurs matériaux d'emballage dans un dispositif d'emballage associé à la presse à balle agricole, assurant l'emballage du matériau collecté en accord avec la stratégie de formation de balle déterminée ; et dans lequel le dispositif de commande est configuré de manière à produire et à délivrer le ou les signaux de commande afin de commander de manière automatique le chargement par le carrousel du ou des matériaux d'emballage dans un dispositif d'emballage de la presse à balle.

6. Dispositif de commande selon l'une quelconque des revendications précédentes, dans lequel la stratégie de formation de balle comprend, dans un premier temps, l'emballage du matériau collecté avec un premier matériau d'emballage et ensuite le sur-emballage du matériau lié avec un second matériau d'emballage.

7. Dispositif de commande selon l'une quelconque des revendications précédentes, configuré de manière à :
recevoir, par l'intermédiaire du dispositif d'entrée électronique, des données de capteur à partir d'un capteur d'humidité associé à la presse à balle agricole ; et
déterminer un niveau d'humidité du matériau collecté en fonction de ces dernières.

8. Dispositif de commande selon la revendication 7, dans lequel le capteur d'humidité est monté sur la presse à balle agricole, ou couplé d'une autre manière à cette dernière, et configuré afin de contrôler le matériau collecté dans la presse à balle.

9. Dispositif de commande selon la revendication 8, dans lequel le capteur d'humidité est monté sur la presse à balle, ou couplé d'une autre manière à cette dernière, et configuré afin de contrôler le matériau collecté par un prélèvement de récolte de la presse à balle et/ou de matériau à l'intérieur du compartiment de formation de balle de la presse à balle.

10. Dispositif de commande selon l'une quelconque des revendications 1 à 6, configuré de manière à déterminer un niveau d'humidité attendu en fonction de données représentatives de l'environnement de travail de la presse à balle ; dans lequel les données d'environnement de travail comprennent un environnement cartographié comprenant des informations représentatives d'un niveau d'humidité mesuré ou attendu pour un matériau à un ou plusieurs emplacements à l'intérieur de l'environnement cartographié.

11. Dispositif de commande selon la revendication 10, dans lequel les données d'environnement de travail comprennent une indication des une ou plusieurs conditions d'environnement, comportant une ou plusieurs conditions parmi : une température, une période de l'année ; une heure de la journée ; une mesure de précipitations ; et une humidité.

12. Dispositif de commande selon l'une quelconque des revendications précédentes, configuré de manière à recevoir une entrée d'utilisateur représentative d'un niveau d'humidité délivré par un opérateur de la presse à balle et à déterminer la stratégie de formation de balle en fonction de cette dernière.

13. Dispositif comprenant :
un carrousel destiné à charger une pluralité de différents matériaux d'emballage sur un dispositif d'emballage ; et
un dispositif de commande selon l'une quelconque des revendications précédentes configuré de manière à commander le fonctionnement du carrousel et/ou du dispositif d'emballage en accord avec une stratégie de formation de balle déterminée.

14. Presse à balle agricole comprenant le dispositif de commande selon l'une quelconque des revendications 1 à 12 ou pouvant être commandée par ce dernier, ou comprenant le dispositif selon la revendication 13.

15. Procédé de commande du fonctionnement d'un ou plusieurs composants pouvant être commandés d'une presse à balle agricole, comprenant :
la réception de données représentatives d'un niveau d'humidité de matériau collecté par la presse à balle agricole ;
la détermination, en fonction du niveau d'humidité, d'une stratégie de mise en forme de balle du matériau collecté, la stratégie de formation de balle comportant une indication d'un matériau d'emballage pour la balle formée ;
la commande d'un ou plusieurs composants opérationnels associés à la presse à balle en fonction de la stratégie de formation de balle déterminée.
